# EUROPEAN PATENT APPLICATION

(11) **EP 4 223 579 A1**
(43) Date of publication of application: **09.08.2023**
(21) Application number: 22020041.4
(22) Date of filing: 08.02.2022
(51) Int. Cl.: B60L 53/10, B60L 53/66, B60L 3/12, B60L 53/65

(54) **METHOD AND APPARATUS FOR PREDICTING A CHARGING RATE AT A CHARGING STATION FOR A PLUG-IN ELECTRIC VEHICLE**

(71) Applicant: Dr. Ing. h.c. F. Porsche Aktiengesellschaft, 70435 Stuttgart (DE)
(72) Inventor: Foligno, Mark, 10245 Berlin (DE)

(57) **Abstract**

The invention provides a method of predicting a charging rate at a charging station for a plug-in electric vehicle characterized in capturing historical charging patterns (21, 22, 23) observed at the charging station, determining conditions of the vehicle at time of charge, and estimating the probable charging rate at the time of charge based on the charging rate advertised by the charging station and the historical charging patterns (21, 22, 23) relating to the determined conditions. The invention further provides a corresponding data processing apparatus, a corresponding computer program, and a corresponding medium.

## Description

The present invention pertains to a method of predicting a charging rate at a charging station for a plug-in electric vehicle. The invention further relates to a corresponding data processing apparatus, a corresponding computer program, and a corresponding medium.

### Background art

DE102010027729A1, US20210268929A1, EP3130504A1, and DE102011086903A1 each disclose a method of predicting the charging rate of a charging station that considers the condition, particularly state of charge, of the vehicle at time of charge as well as historical charging rate data recorded by the station or previously charged vehicles.

### Disclosure of the invention

The invention provides a method of predicting a charging rate at a charging station for a plug-in electric vehicle, corresponding data processing apparatus, corresponding computer program, and corresponding medium as per the independent claims.

A fundamental idea of the invention is to learn charging rates from charging stations based upon historical conditions and make predictions about the charging rate.

Advantageously, this approach allows for a more accurate estimate of the probable charging rate and charging time of the electric vehicle seeking to charge.

Embodiments of the invention are set out in the dependent claims.

### Brief description of drawings

Figure 1 shows a fast-charging station being approached by a plug-in electric vehicle.
Figure 2 shows three historical charging patterns observed at the charging station.
Figure 3 shows the instrument cluster of the plug-in electric vehicle seeking to charge.

### Embodiment of the invention

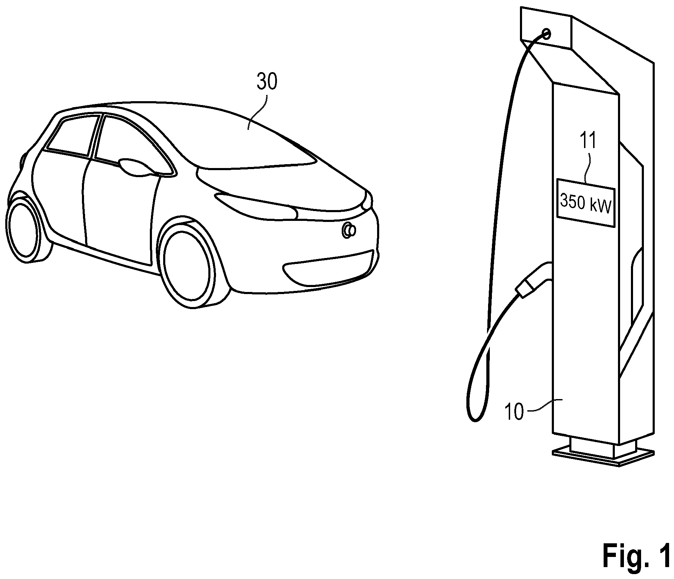

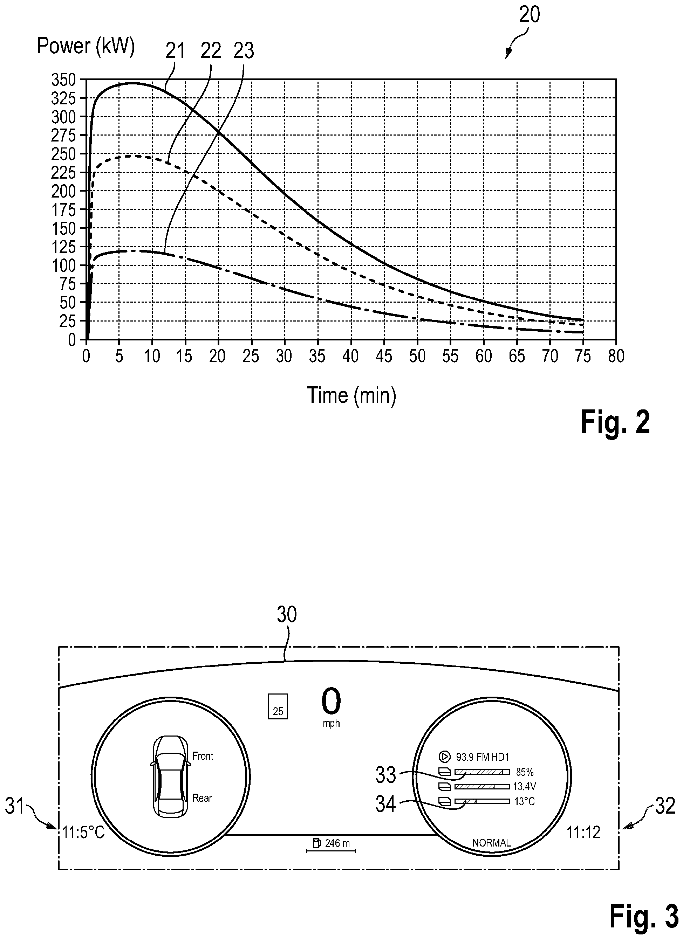

Figure 1 depicts a typical use case of a plug-in electric vehicle (30) approaching a compatible charging station (10). While the charging station (10) advertises a maximum charging rate (11) of 350 kW, the driver of the vehicle (30) is aware that actual charging rates may fall short of this advertised rate depending on numerous factors. By way of example, the chart (20) as per Figure 2 illustrates conceivable deviations (22, 23) from the ideal charging pattern (21) under varying conditions.

To account for these variations, the charging station (10) or vehicle (30) captures such historical charging patterns (21, 22, 23), preferably tagging each pattern with the time (32) of day, day of the week, and conditions under which it was observed. Now referring to Figure 3, corresponding conditions (31-34) are determined by the approaching vehicle (30) when charging is imminent and may include its maximum charging rate, ambient temperature (31), time (32), current charge level (33), and battery temperature (34).

Upon determining said conditions (31-34) of the vehicle (30), the historical charging patterns (21, 22, 23) are leveraged to make a prediction of the charging rate at the given charging station (10) at the envisaged time of charge and relating to all other forementioned conditions (31-34). It will be appreciated that diverse approaches can be employed for such estimation without departing from the scope of the invention. Suitable methods in this context include numerical analysis, statistical approximation, or machine learning based on artificial intelligence.

## Claims

1. Method of predicting a charging rate at a charging station (10) for a plug-in electric vehicle (30),
**characterized in**
- capturing historical charging patterns (21, 22, 23) observed at the charging station (10),
- determining conditions (31-34) of the vehicle (30) at time (32) of charge, and
- estimating the probable charging rate at the time (32) of charge based on the charging rate (11) advertised by the charging station (10) and the historical charging patterns (21, 22, 23) relating to the determined conditions (31-34).

2. Method as per claim 1,
**characterized in that**
- the conditions (31-34) include an ambient temperature (31).

3. Method as per claim 1 or 2,
**characterized in** at least one of the following:
- the time (32) of charge is expressed in terms of the time (32) of day or
- the time (32) of charge is expressed in terms of a day of the week.

4. Method as per any of claims 1 through 3,
**characterized in that**
- the conditions (31-34) include a charge level (33) of the vehicle (30).

5. Method as per any of claims 1 through 4,
**characterized in that**
- the conditions (31-34) include a battery temperature (34) of the vehicle (30).

6. Method as per any of claims 1 through 5,
**characterized in that**
- the conditions (31-34) include a maximum charging rate of the vehicle (30).

7. Method as per any of claims 1 through 6,
**characterized in** at least one of the following:
- the charging patterns (21, 22, 23) are captured from the charging station (10) or
- the charging patterns (21, 22, 23) are captured from vehicles being charged at the charging station (10).

8. Data processing apparatus having means for carrying out the method as per any of claims 1 through 7.

9. Computer program adapted to perform the method as per any of claims 1 through 7.

10. Computer-readable medium having stored thereon the program as per claim 9.

## Amended claims

### Amended claims in accordance with Rule 137(2) EPC.

1. Method of predicting a charging rate at a charging station (10) for a plug-in electric vehicle (30), comprising
- capturing historical charging patterns (21, 22, 23) observed at the charging station (10),
- determining conditions (31-34) of the vehicle (30) at time (32) of charge, and
- estimating the probable charging rate at the time (32) of charge based on the charging rate (11) advertised by the charging station (10) and the historical charging patterns (21, 22, 23) relating to the determined conditions (31-34),
**characterized in that**
- the conditions (31-34) include an ambient temperature (31) and
- the charging patterns (21, 22, 23) are captured from vehicles being charged at the charging station (10).

2. Method as per claim 1, **characterized in** at least one of the following:
- the time (32) of charge is expressed in terms of the time (32) of day or
- the time (32) of charge is expressed in terms of a day of the week.

3. Method as per claim 1 or 2,
**characterized in that**
- the conditions (31-34) include a charge level (33) of the vehicle (30).

4. Method as per any of claims 1 through 3,
**characterized in that**
- the conditions (31-34) include a battery temperature (34) of the vehicle (30).

5. Method as per any of claims 1 through 4,
**characterized in that**
- the conditions (31-34) include a maximum charging rate of the vehicle (30).

6. Method as per any of claims 1 through 5,
**characterized in that**
- the charging patterns (21, 22, 23) are captured from the charging station (10).

7. Data processing apparatus having an interface to the vehicle battery and means for carrying out the method as per any of claims 1 through 6.

8. Computer program adapted to perform the method as per any of claims 1 through 6.

9. Computer-readable medium having stored thereon the program as per claim 8.
